# EUROPEAN PATENT APPLICATION

(11) **EP 4 253 285 A1**
(43) Date of publication of application: **04.10.2023**
(21) Application number: 22166340.4
(22) Date of filing: 01.04.2022
(51) Int. Cl.: B65G 15/02, B65G 21/16, B65G 23/10, B65G 23/44

(54) **DUAL DRIVE CONVEYOR BELT**

(71) Applicant: Logi Concept Engineering B.V., 7156 NW Beltrum (NL)
(72) Inventor: Brinkers, Joep Hendrik, 7151 CG Eibergen (NL)
(74) Representative: 't Jong, Bastiaan Jacob

(57) **Abstract**

The invention relates to a belt conveyor comprising:
- a frame
- two spaced apart terminal rollers mounted to the frame;
- an endless conveyor belt running around the two spaced apart terminal rollers to form an upper run and a lower run;
- drive means engaging on the top side of the lower run of the endless conveyor belt, wherein the drive means are mounted in a linear guide arranged to the frame, which linear guide has a guiding direction substantially perpendicular to a plane through the rotation axes of the two space apart terminal rollers; and
- locking means for locking movement of the drive means along the linear guide in a first direction and allowing movement in the opposite direction, wherein the first direction is directed towards the plane through the rotation axes.

## Description

The invention relates to a belt conveyor, in particular a curved belt conveyor, comprising:
- a frame
- two spaced apart terminal rollers mounted to the frame;
- an endless conveyor belt running around the two spaced apart terminal rollers to form an upper run and a lower run.

Such belt conveyors are widely known and such conveyors are typically driven by driving one of the terminal rollers. In such a configuration the conveyor belt can only be driven properly by driving the leading terminal roller when viewed in transport direction of the conveyor belt. This ensures that in the upper run a pulling force is present and accordingly the upper run sufficiently tensioned to transport products on top of the upper run.

If the transport direction needs to be reversed with such a conveyor belt, both terminal rollers need to be driven, such that always the leading terminal roller can be driven for the selected transport direction. This typically increases the manufacturing costs for a conveyor belt which can be driven in both directions.

Curved belt conveyors are used to change the transport direction of goods, but are also used to switch between two transport sections. In such a case a curved belt conveyor directed to the left is used in combination with a curved belt conveyor directed to the right. A curved belt conveyor has conical terminal rollers, one of which is at least driven and a conveyor belt with tapered belt elements. These two curved belt conveyors are moved one at a time in front of a supply belt conveyor depending on the desired direction in which goods need to be transported. Again, costs increase substantially as two separate belt conveyors need to be provided.

It is an object of the invention to reduce or even remove the above mentioned disadvantages.

This object is achieved according to the invention with a belt conveyor according to the preamble, which is characterized by:
- drive means engaging on the top side of the lower run of the endless conveyor belt, wherein the drive means are mounted in a linear guide arranged to the frame, which linear guide has a guiding direction substantially perpendicular to a plane through the rotation axes of the two space apart terminal rollers; and
- locking means for locking movement of the drive means along the linear guide in a first direction and allowing movement in the opposite direction, wherein the first direction is directed towards the plane through the rotation axes.

Due to the linear guide, the drive means are supported by the lower run of the conveyor belt. The weight of the drive means will tension the conveyor belt when stopped. If the drive means are powered to drive the conveyor belt, the leading part of the conveyor belt will be pulled towards the drive means tensioning the leading part, while the trailing part of the conveyor belt will lose some tension. With the drive means being mounted in the linear guide, the drive means will be urged out of contact with the lower run of the conveyor belt, when the drive means are powered. However, this is prevented by the locking means, which only allow movement of the drive means towards the lower run of the conveyor belt. As soon as any play will occur in the conveyor belt, the drive means will shift a bit in the linear guide and the locking means will lock the drive means in a somewhat lower position maintaining the tension in the conveyor belt.

With the belt conveyor according to the invention it is thus possible to drive the conveyor belt in both directions with only a single drive means, while maintaining sufficient tension in the upper run of the conveyor belt. Also any wear in the conveyor belt is automatically compensated in the belt conveyor according to the invention.

In a preferred embodiment of the belt conveyor according to the invention the guiding direction is in use parallel to the gravitational direction. Having the guiding direction parallel to the gravitational direction ensures that the weight of the drive means is optimally used for tensioning the conveyor belt.

In a further embodiment of the belt conveyor according to the invention the drive means comprise a drive shaft extending perpendicular to the direction of movement of the conveyor belt and wherein the drive shaft engages on the top side of the lower run of the endless conveyor belt.

With the drive shaft it is possible to transfer driving forces evenly over the width of the conveyor belt. The drive shaft could be provided with sprockets or with a friction material to engage on the conveyor belt.

In a further embodiment of the belt conveyor according to the invention a drive motor is arranged on one end of the drive shaft for driving the drive shaft. In case of a curved belt conveyor, the locking means are preferably arranged on the other end of the drive shaft, wherein the drive motor is positioned in the inside of the curve of the curved belt conveyor.

Preferably, the linear guide comprises two guide rails provided on either side of the width of the conveyor belt and each end of the drive shaft is guided by on of the guide rails.

In yet another preferred embodiment of the belt conveyor according to the invention two guide rollers are provided parallel to and on either side of the drive shaft, wherein the conveyor belt winds between the two guide rollers and the drive shaft, such that the two guide rollers engage on the bottom side of the lower run of the endless conveyor belt.

Preferably, the conveyor belt parts between the two guide rollers and the drive shaft run substantially parallel to the guiding direction.

The two guide rollers ensure that the drive shaft has a good engagement with the conveyor belt. The guide rollers further ensure, especially when the conveyor belt parts run substantially parallel to the guiding direction, that the weight of the drive means is converted mainly in a tension force in the conveyor belt. It also ensures, that when driving the conveyor belt, any slack in the conveyor belt results in movement of the drive means in the linear guide. This movement is then locked by the locking means, ensuring the conveyor belt is always under the right tension.

In still a further preferred embodiment of the belt conveyor according to the invention the locking means comprise a ratchet mechanism. A ratchet mechanism typically comprises a linear rack with teeth, and a pivoting, spring-loaded finger called a pawl that engages the teeth. The teeth are uniform but asymmetrical, with each tooth having a moderate slope on one edge and a much steeper slope on the other edge.

When the teeth are moving in the unrestricted direction, the pawl easily slides up and over the gently sloped edges of the teeth, with a spring forcing it into the depression between the teeth as it passes the tip of each tooth. When the teeth move in the opposite direction, however, the pawl will catch against the steeply sloped edge of the first tooth it encounters, thereby locking it against the tooth and preventing any further motion in that direction.

In yet a further embodiment of the belt conveyor according to the invention the belt conveyor is a curved, preferably semi-circular belt conveyor.

With a curved belt conveyor, the links are typically wedge shaped, i.e. tapered, and the terminal rollers, as well as a drive shaft and guide rollers are truncated cone shaped.

These and other features of the invention will be elucidated in conjunction with accompanying drawings.
Figure 1 shows a schematic side view of an embodiment of a belt conveyor according to the invention.
Figure 2 shows a cross sectional view along the line II-II in figure 1.
Figure 3 shows a schematic detail of one side of the linear guide for a belt conveyor according to the invention..
Figure 4 shows a schematic detail of the other side of the linear guide for a belt conveyor according to the invention.
Figure 5 shows a schematic view of a second embodiment of a belt conveyor according to the invention.
Figure 6 shows a cross sectional view along the line IV-IV in figure 5.

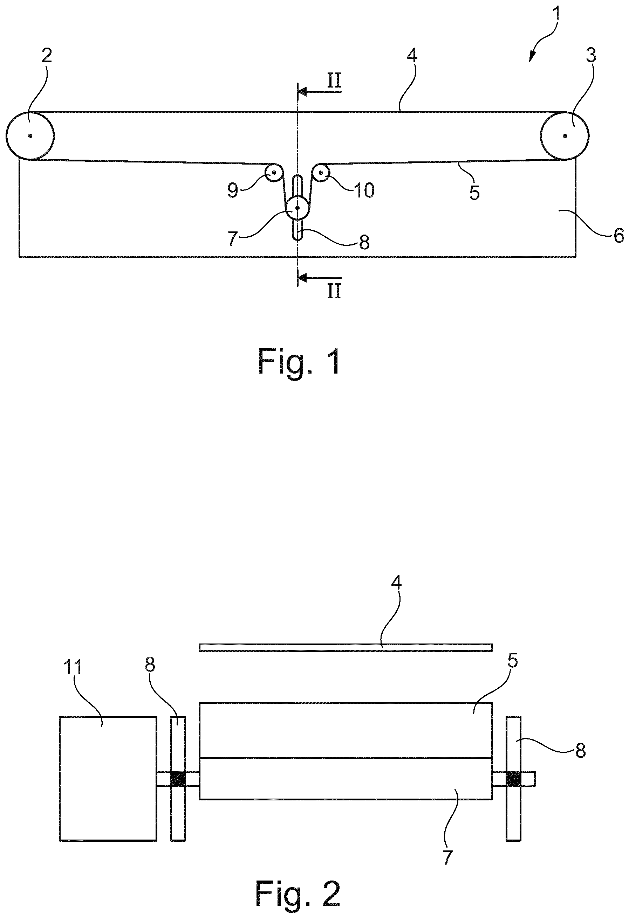

Figure 1 shows a belt conveyor 1 having a first terminal roller 2 and a second terminal roller 3 mounted in a frame 6. A conveyor belt runs around the first and second terminal roller 2, 3 to form an upper run 4 and a lower run 5.

A drive shaft 7 is mounted in a linear guide 8 and rests on the lower run 5. Guide rollers 9, 10 are provided on opposite sides of the drive shaft 7 and the guide rollers 9, 10 engage on the bottom side of the lower run 5.

Figure 2 shows a cross section along the line II-II in figure 1. The drive shaft 7 is guided with both ends in a guide 8 and on one end a drive motor 11 is provided to drive the drive shaft 7 and the conveyor belt 4, 5 with which it is engaged.

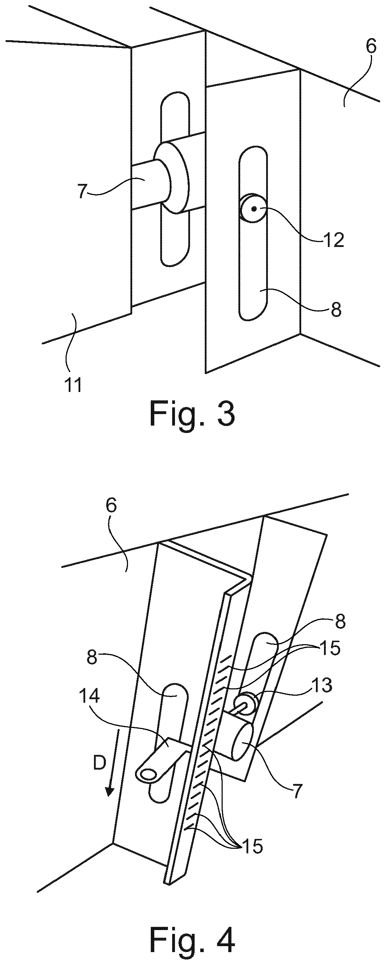

Figure 3 shows a schematic detail of one side of the linear guide 8. Rollers 12 are provided at one end of the drive shaft 7, which rollers 12 guide the shaft 7 along the linear guide 8.

Figure 4 shows a schematic detail of the other side of the linear guide 8. Also the other end of the drive shaft 7 is provided with rollers 13 to guide the shaft end 7 along the linear guide 8.

This end is furthermore provided with a ratchet mechanism comprising a pawl 14 and a row of holes or teeth 15, which ensure that the drive shaft 7 can only shift in the direction D.

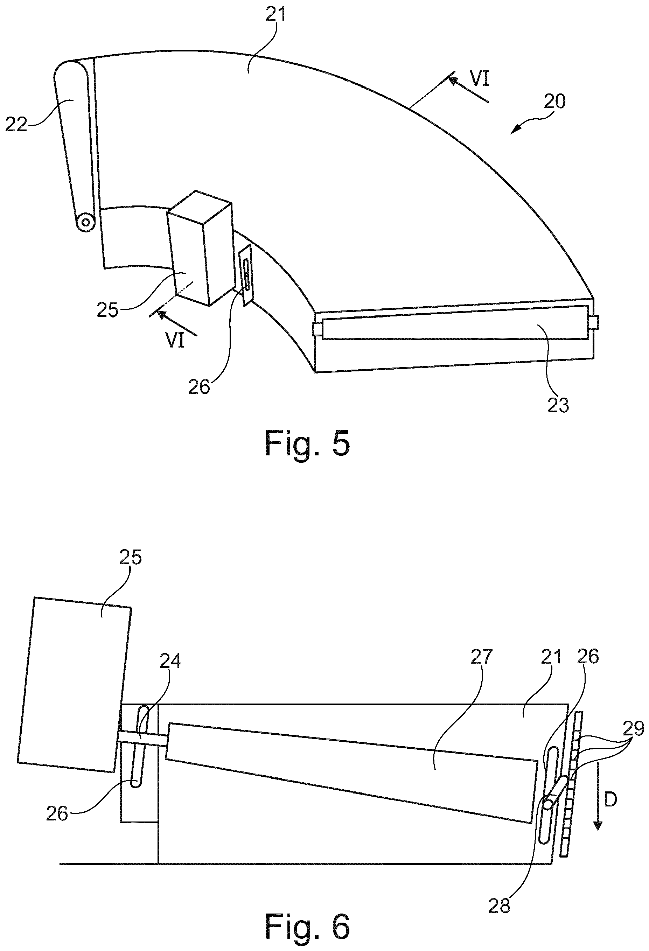

Figure 5 shows a second embodiment of a belt conveyor 20, which is a curved belt conveyor. For clarity the conveyor belt is not shown.

On opposite ends of the frame 21 truncated cone shape terminal rollers 22, 23 are arranged to the frame 21. Between the terminal rollers 22, 23 a drive shaft 24 with motor 25 is mounted in linear guides 26 (see also figure 6). The drive shaft 24 is provided with a truncated cone shaped engaging surface 27, with which the conveyor belt is driven.

On the end of the drive shaft 24 opposite of the motor 25 locking means are provided comprising a spring loaded pawl 28 and teeth or holes 29. These locking means 28, 29 allow only for movement of the drive shaft 24 in the direction D, such that the conveyor belt will be kept under tension.

## Claims

1. Belt conveyor, in particular a curved belt conveyor, comprising:
- a frame
- two spaced apart terminal rollers mounted to the frame;
- an endless conveyor belt running around the two spaced apart terminal rollers to form an upper run and a lower run;
**characterized by**
- drive means engaging on the top side of the lower run of the endless conveyor belt, wherein the drive means are mounted in a linear guide arranged to the frame, which linear guide has a guiding direction substantially perpendicular to a plane through the rotation axes of the two space apart terminal rollers; and
- locking means for locking movement of the drive means along the linear guide in a first direction and allowing movement in the opposite direction, wherein the first direction is directed towards the plane through the rotation axes.

2. Belt conveyor according to claim 1, wherein the guiding direction is in use parallel to the gravitational direction.

3. Belt conveyor according to claim 1 or 2, wherein the drive means comprise a drive shaft extending perpendicular to the direction of movement of the conveyor belt and wherein the drive shaft engages on the top side of the lower run of the endless conveyor belt.

4. Belt conveyor according to claim 3, wherein a drive motor is arranged on one end of the drive shaft for driving the drive shaft.

5. Belt conveyor according to claim 3 or 4, wherein the linear guide comprises two guide rails provided on either side of the width of the conveyor belt and wherein each end of the drive shaft is guided by on of the guide rails.

6. Belt conveyor according to any of the claim 3 - 5, wherein two guide rollers are provided parallel to and on either side of the drive shaft, wherein the conveyor belt winds between the two guide rollers and the drive shaft, such that the two guide rollers engage on the bottom side of the lower run of the endless conveyor belt.

7. Belt conveyor according to claim 6, wherein the conveyor belt parts between the two guide rollers and the drive shaft run substantially parallel to the guiding direction.

8. Belt conveyor according to any of the preceding claims, wherein the locking means comprise a ratchet mechanism.

9. Belt conveyor according to any of the preceding claims, wherein the belt conveyor is a curved, preferably semi-circular belt conveyor.
